(19) Europäisches Patentamt / European Patent Office / Office européen des brevets

(11) **EP 4 485 397 A1**

(12) **EUROPEAN PATENT APPLICATION**

(43) Date of publication:
**01.01.2025 Bulletin 2025/01**

(21) Application number: **24185602.0**

(22) Date of filing: **01.07.2024**

(51) International Patent Classification (IPC):
**G06V 40/16** (2022.01)     **G06V 10/25** (2022.01)

(52) Cooperative Patent Classification (CPC):
**G06V 40/171; G06V 10/25; G06V 40/165**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.06.2023 CN 202310795975
30.04.2024 KR 20240058033**

(71) Applicant: **Samsung Electronics Co., Ltd.
Suwon-si, Gyeonggi-do 16677 (KR)**

(72) Inventors:
• **LI, Jingzhi**
  **Xi'an, 710000 (CN)**
• **WANG, Kai**
  **Xi'an, 710000 (CN)**
• **GUO, Zidong**
  **Xi'an, 710000 (CN)**
• **BAEK, Jiwon**
  **16678 Suwon-si (KR)**
• **HAN, Seungju**
  **16678 Suwon-si (KR)**

(74) Representative: **Arnold & Siedsma
Bezuidenhoutseweg 57
2594 AC The Hague (NL)**

(54) **METHOD AND APPARATUS WITH IMAGE PROCESSING**

(57)     A processor-implemented method with image processing includes detecting facial keypoints from an input face image determining a face area of the input face image and a facial feature area of the input face image based on the facial keypoints, and determining the input face image to be an invalid face image in response to the facial feature area satisfying a first preset condition, wherein the first preset condition comprises either one or both of a shape condition regarding a shape of the facial feature area, and a position condition regarding a relationship between a position of the facial feature area and a position of the face area.

Start

Detect facial keypoints from input face image — 110

Determine face area of input face image and facial feature area of input face image based on facial keypoints — 120

Determine input face image to be invalid face image when facial feature area satisfies first preset condition — 130

End

FIG. 1

EP 4 485 397 A1

**Description**

BACKGROUND

1. Field

The following disclosure relates to a method and apparatus with image processing.

2. Description of Related Art

Technical automation of a recognition process may be implemented, for example, through an artificial intelligence model (e.g., a neural network model) implemented by a processor as a special computational structure, which may provide an intuitive mapping, in terms of computation, between an input pattern and an output pattern after considerable training. The trained ability to generate such a mapping may be called a learning ability of artificial intelligence. Further, due to the specialized training, such specialized and trained artificial intelligence may have a generalization ability to generate relatively accurate output for untrained input patterns, for example. Such artificial intelligence technology may be used for identity recognition, for example, face recognition.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.
In one or more general aspects, a processor-implemented method with image processing includes detecting facial keypoints from an input face image, determining a face area of the input face image and a facial feature area of the input face image based on the facial keypoints, and determining the input face image to be an invalid face image in response to the facial feature area satisfying a first preset condition, wherein the first preset condition comprises either one or both of a shape condition regarding a shape of the facial feature area, and a position condition regarding a relationship between a position of the facial feature area and a position of the face area.
The shape condition may be satisfied in response to the shape of the facial feature area being a preset shape.
The position condition may be satisfied in response to the position of the face area not corresponding to the position of the facial feature area.
The determining of the face area and the facial feature area may include determining an area comprising the facial keypoints to be the face area, and determining an area comprising feature keypoints other than contour keypoints corresponding to a facial contour among the facial keypoints to be the facial feature area.
The position condition may be satisfied in response to a width-directional position of a face envelope box of the face area not corresponding to a width-directional position of a feature envelope box of the facial feature area, the shape condition may be satisfied in response to a shape of the feature envelope box being a preset shape, the face envelope box may be a smallest box comprising the facial keypoints, and the feature envelope box may be a smallest box comprising keypoints belonging to the facial feature area among the facial keypoints.
The shape of the feature envelope box may be determined to be the preset shape, in response to a height-to-width ratio of the feature envelope box being greater than a first threshold value, and it may be determined that the width-directional position of the face envelope box does not correspond to the width-directional position of the feature envelope box of the facial feature area, in response to a ratio between a distance between a height-directional central axis of the face envelope box and a height-directional central axis of the feature envelope box and a width of the face envelope box being less than a second threshold value.
The method may include detecting a face area box from the input face image, and determining the input face image to be an invalid face image, in response to the face area box satisfying a second preset condition, wherein the second preset condition may include either one or both of a face condition regarding whether the face area box is determined to be a non-face, and a space condition regarding whether the face area box does not spatially correspond to the face area.
The determining of the input face image to be an invalid face image may include updating the face area box by enlarging the face area box of the input face image, determining a face confidence of the updated face area box indicating a probability that the updated face area box may include a face, and determining the updated face area box to be a non-face using a face classification model, in response to the face confidence being greater than a third threshold value and less than a fourth threshold value.
The determining of the input face image to be an invalid face image may include determining whether the face area box does not spatially correspond to the face area, based on a degree of spatial overlap between the face area box and the face envelope box of the face area, and the face envelope box may be a smallest box comprising the facial keypoints.

The determining of whether the face area box does not spatially correspond to the face area may include determining an intersection over union (IOU) between the face area box and the face envelope box, and determining that the face area box does not spatially correspond to the face area, in response to the IOU being less than a fifth threshold value.

In one or more general aspects, a non-transitory computer-readable storage medium may store instructions that, when executed by one or more processors, configure the one or more processors to perform any one, any combination, or all of operations and/or methods.

In one or more general aspects, an electronic device includes one or more processors configured to detect facial keypoints from an input face image, determine a face area of the input face image and a facial feature area of the input face image based on the facial keypoints, and determine the input face image to be an invalid face image in response to the facial feature area satisfying a first preset condition, wherein the first preset condition may include either one or both of a shape condition regarding a shape of the facial feature area, and a position condition regarding a relationship between a position of the facial feature area and a position of the face area.

The shape condition may be satisfied in response to the shape of the facial feature area being a preset shape, and the position condition may be satisfied in response to the position of the face area not corresponding to the position of the facial feature area.

For the determining of the face area and the facial feature area, the one or more processors may be configured to determine an area comprising the facial keypoints to be the face area, and determine an area comprising feature keypoints other than contour keypoints corresponding to a facial contour among the facial keypoints to be the facial feature area.

The position condition may be satisfied in response to a width-directional position of a face envelope box of the face area not corresponding to a width-directional position of a feature envelope box of the facial feature area, the shape condition may be satisfied in response to a shape of the feature envelope box being a preset shape, the face envelope box may be a smallest box comprising the facial keypoints, and the feature envelope box may be a smallest box comprising keypoints belonging to the facial feature area among the facial keypoints.

The shape of the feature envelope box may be determined to be the preset shape, in response to a height-to-width ratio of the feature envelope box being greater than a first threshold value, and it may be determined that the width-directional position of the face envelope box does not correspond to the width-directional position of the feature envelope box of the facial feature area, in response to a ratio between a distance between a height-directional central axis of the face envelope box and a height-directional central axis of the feature envelope box and a width of the face envelope box being less than a second threshold value.

The one or more processors may be configured to detect a face area box from the input face image, and determine the input face image to be an invalid face image, in response to the face area box satisfying a second preset condition, wherein the second preset condition may include either one or both of a face condition regarding whether the face area box is determined to be a non-face, and a space condition regarding whether the face area box does not spatially correspond to the face area.

For the determining of the input face image to be the invalid face image, the one or more processors may be configured to update the face area box by enlarging the face area box of the input face image, determine a face confidence of the updated face area box indicating a probability that the updated face area box may include a face, and determine the updated face area box to be a non-face using a face classification model, in response to the face confidence being greater than a third threshold value and less than a fourth threshold value.

For the determining of the input face image to be the invalid face image, the one or more processors may be configured to determine whether the face area box does not spatially correspond to the face area, based on a degree of spatial overlap between the face area box and the face envelope box of the face area, and the face envelope box may be a smallest box comprising the facial keypoints.

In one or more general aspects, a processor-implemented method with image processing includes detecting keypoints from an input image, determining an area of the input image and a feature area of the input image based on the keypoints, and determining whether the input image is an invalid image based on either one or both of a height-to-width ratio of the feature area, and a ratio between a distance between a height-directional central axis of the area of the input image and the height-directional central axis of the feature area and the width of the area of the input image.

Other features and aspects will be apparent from the following detailed description, the drawings, and the claims.

BRIEF DESCRIPTION OF THE DRAWINGS

FIG. 1 illustrates an example of an image processing method.

FIG. 2 illustrates an example of a facial feature area and a face area of an input face image.

FIGS. 3 and 4 illustrate an example of a face recognition operation using a face classification model.

FIG. 5 illustrates an example of a face area box and a face area of an input face image.

FIG. 6 illustrates an example of a face recognition operation using a preset condition.

FIG. 7 illustrates an example of a configuration of an electronic device.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, and modifications of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Throughout the specification, when a component or element is described as "on," "connected to," "coupled to," or "joined to" another component, element, or layer, it may be directly (e.g., in contact with the other component, element, or layer) "on," "connected to," "coupled to," or "joined to" the other component element, or layer, or there may reasonably be one or more other components elements, or layers intervening therebetween. When a component or element is described as "directly on", "directly connected to," "directly coupled to," or "directly joined to" another component element, or layer, there can be no other components, elements, or layers intervening therebetween. Likewise, expressions, for example, "between" and "immediately between" and "adjacent to" and "immediately adjacent to" may also be construed as described in the foregoing.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C", and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

Unless otherwise defined, all terms used herein including technical or scientific terms have the same meanings as those generally understood consistent with and after an understanding of the present disclosure. Terms, such as those defined in commonly used dictionaries, should be construed to have meanings matching with contextual meanings in the relevant art and the present disclosure, and are not to be construed as an ideal or excessively formal meaning unless otherwise defined herein.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. The use of the term "may" herein with respect to an example or embodiment (e.g., as to what an example or embodiment may include or implement) means that at least one example or embodiment exists where such a feature is included or implemented, while all examples are not limited thereto. The use of the terms "example" or "embodiment" herein have a same meaning (e.g., the phrasing "in one example" has a same meaning as "in one embodiment", and "one or more examples" has a same meaning as "in one or more embodiments").

Hereinafter, examples will be described in detail with reference to the accompanying drawings. When describing the examples with reference to the accompanying drawings, like reference numerals refer to like components and a repeated description related thereto will be omitted.

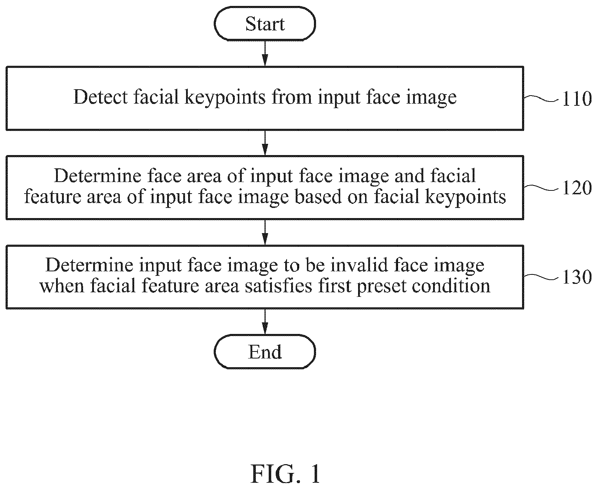

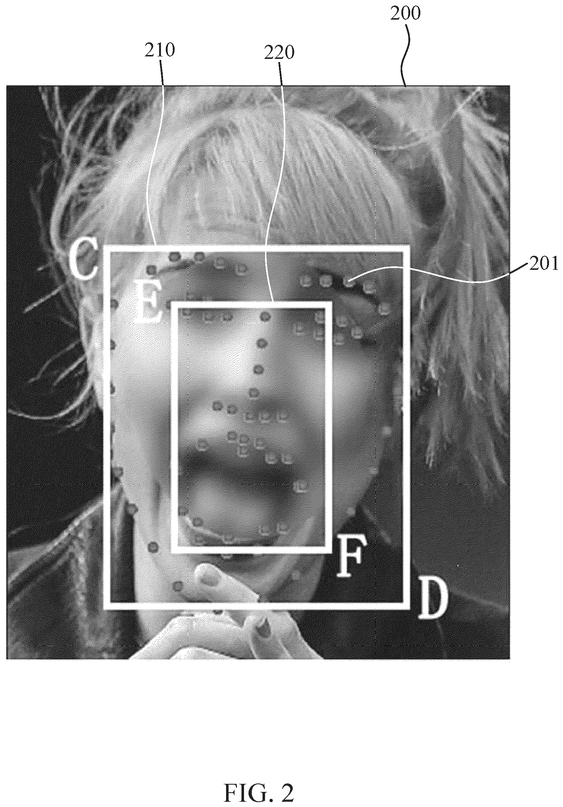

FIG. 1 illustrates an example of an image processing method, and FIG. 2 illustrates an example of a facial feature area and a face area of an input face image. Operations 110-130 to be described hereinafter may be performed sequentially in the order and manner as shown and described below with reference to FIG. 1, but the order of one or more of the operations may be changed, one or more of the operations may be omitted, and/or two or more of the operations may be performed in parallel or simultaneously without departing from the scope of the example embodiments described herein.

According to an example, face recognition may include face detection, facial keypoint detection, face alignment, facial feature extraction, facial feature comparison, and/or a combination thereof. An artificial intelligence model (e.g., a neural network model) may be used for face recognition. For example, the artificial intelligence model may include a face detection model, a facial keypoint detection model, a face classification model, or a combination thereof. The performance of facial feature extraction in a typical face recognition method may be affected by the quality of the input face image. For example, when the quality of the input face image is low, face misrecognition may occur in the typical face recognition method. For example, there may be a case where the input face image includes a too small area of the face, the input face image has a too large face deflection angle, frontal face detection fails in the input face image, and/or the quality of the input face image is too low for the typical face recognition method to identify a face, but examples are not limited thereto.

According to an electronic device of one or more embodiments, filtering an appropriate input face image in face detection may improve face recognition accuracy over the typical face recognition method. For example, the face recognition accuracy may increase by filtering a low-quality face image and/or a non-face image.

Referring to FIG. 1, in operation 110, an electronic device may detect facial keypoints from an input face image. The electronic device may detect facial keypoints of a face from the input face image using a facial keypoint detection model. For example, the facial keypoint detection model may be an artificial intelligence model (e.g., a neural network model) trained to detect facial keypoints from an input face image. In this case, the facial keypoint detection model may be pretrained to detect facial keypoints from an input face image through machine learning. The facial keypoints may include points used to identify the positions of feature parts of a face. For example, the feature parts of the face may include the face contour, eyes, pupils, eyebrows, nose, mouth, ears, and the like, but are not limited thereto.

In operation 120, the electronic device may determine a face area of the input face image and a facial feature area of the input face image based on the facial keypoints. The facial feature area may be a salient area. The electronic device may determine areas corresponding to face parts based on areas in which the facial keypoints are positioned.

The electronic device may determine an area including the facial keypoints to be the face area. For example, the electronic device may determine an area including the entire face to be the face area. The area including the entire face may be an area including all the facial keypoints. For example, the electronic device may determine an area 210 including all facial keypoints including a facial keypoint 201 in an input face image 200 of FIG. 2 to be the face area.

The electronic device may determine an area 220 including feature keypoints other than contour keypoints corresponding to the face contour, among the facial keypoints, to be the facial feature area. The facial feature area may include more facial keypoints for identity recognition than the face area. For example, the facial feature area may include more identification information for identity recognition than the face area. For example, outer keypoints among the facial keypoints may correspond to the contour keypoints. For example, the outer keypoints of the face may include outermost points and/or keypoints at a predetermined distance from the outermost points or having a predetermined relationship with the outermost keypoints, among the facial keypoints. For example, the facial feature area may include an area corresponding to preset feature parts (e.g., the left eye center, the right eye center, the nose tip, the left mouth corner, and the right mouth corner) of the face. The area other than the area corresponding to the preset feature parts of the face may be the face contour area. The keypoints in the face contour area may correspond to the contour keypoints. The area 220 in the input face image 200 of FIG. 2 may include feature keypoints corresponding to preset feature parts of the face.

In operation 130, the electronic device may determine the input face image to be an invalid face image when the facial feature area satisfies a first preset condition. The first preset condition may include a shape condition regarding the shape of the facial feature area, a position condition regarding the relationship between the position of the facial feature area and the position of the face area, and/or a combination thereof. The shape condition may be satisfied when the shape of the facial feature area is a preset shape. The position condition may be satisfied when the position of the face area does not correspond to the position of the facial feature area. When the facial feature area satisfies the first preset condition, the electronic device may filter the input face image determined to be an invalid face image. In this case, the electronic device may perform an authentication procedure using an image other than the input face image determined to be an invalid face image.

For example, when the face in the input face image has an extreme head pose (e.g., a side face with a large angle, etc., as a non-limiting example), it may be difficult to identify face feature information compared to face contour information. For example, in this case, a face area may be easily detected, but the position of a facial feature area may be occluded by the head itself, or the like, and a reliable facial feature area may not be acquired.

According to an example, the electronic device of one or more embodiments may determine whether the shape of the facial feature area is the preset shape (e.g., a narrow and/or elongated shape, etc., as a non-limiting example, thereby determining whether the face in the input face image has an extreme head pose. The electronic device may determine that the shape condition of the first preset condition is satisfied when the shape of a feature envelope box is a preset shape. The feature envelope box may be the smallest box including keypoints belonging to the facial feature area among the facial keypoints. For example, the area 220 of FIG. 2 corresponding to the facial feature area may be determined to be the feature envelope box. For example, the feature envelope box may be represented as EF=($E_x$, $E_y$, $F_x$, $F_y$). EF may denote the feature envelope box, $E_x$ may denote the x-coordinate of a position E, $E_y$ may denote the y-coordinate of the position E, $F_x$ may denote the x-coordinate of a position F, and $F_y$ may denote the y-coordinate of the position F. The feature envelope box may be represented by the coordinates ($E_x$, $E_y$) of the upper left corner and the coordinates ($F_x$, $F_y$) of the lower right corner, but is not limited thereto.

According to an example, the electronic device may determine that the shape of the feature envelope box is the preset shape when the height-to-width ratio of the feature envelope box is greater than a first threshold value. For example, the electronic device may determine whether the shape of the feature envelope box is the preset shape using Equation 1 below, for example.

Equation 1:

$$ \text{HWR} = \frac{F_y - E_y}{F_x - E_x} \geq T_1 $$

In Equation 1, HWR may denote the height-to-width ratio of the feature envelope box, $E_x$ may denote the x-coordinate of the upper left corner of the feature envelope box, $E_y$ may denote the y-coordinate of the upper left corner of the feature envelope box, $F_x$ may denote the x-coordinate of the lower right corner of the feature envelope box, $F_y$ may denote the y-coordinate of the lower right corner of the feature envelope box, and $T_1$ may denote the first threshold value. The first threshold value may be preset. The first threshold value may be determined experimentally. For example, the first threshold value may be 2.8, but is not limited thereto.

When the height-to-width ratio of the feature envelope box is less than the first threshold value, the electronic device may determine that the shape of the feature envelope box is not the preset shape. In this case, it may be determined that the face in the input face image does not have an extreme head pose, for example, that the face has a normal pose like a frontal face. Accordingly, this input face image may be used for identity recognition without additional processing related to the facial feature area.

The position condition may be satisfied when the position of the face area does not correspond to the position of the facial feature area. According to an example, the position condition may be satisfied when the width-directional position of a face envelope box of the face area does not correspond to the width-directional position of a feature envelope box of the facial feature area. The face envelope box may be the smallest box including the facial keypoints, and the feature envelope box may be the smallest box including keypoints belonging to the facial feature area among the facial keypoints. For example, the area 210 of FIG. 2 corresponding to the face area may be determined to be the face envelope box. For example, the face envelope box may be represented as CD=($C_x$, $C_y$, $D_x$, $D_y$). CD may denote the face envelope box, $C_x$ may denote the x-coordinate of a position C, $C_y$ may denote the y-coordinate of the position C, $D_x$ may denote the x-coordinate of a position D, and $D_y$ may denote the y-coordinate of the position D. The feature envelope box may be represented by the coordinates ($C_x$, $C_y$) of the upper left corner and the coordinates ($D_x$, $D_y$) of the lower right corner, but is not limited thereto.

According to an example, the electronic device may determine that the width-directional position of the face envelope box does not correspond to the width-directional position of the feature envelope box of the facial feature area, when the ratio between the distance between the height-directional central axis of the face envelope box and the height-directional central axis of the feature envelope box and the width of the face envelope box is less than a second threshold value. For example, the electronic device may determine whether the position of the face area does not correspond to the position of the facial feature area using Equation 2 below, for example.

Equation 2:

$$MRR = |\frac{F_x + E_x}{2} - \frac{D_x + C_x}{2}| / (D_x - C_x)$$

In Equation 2, MRR may denote the positional relationship between the face area and the facial feature area, $C_x$ may denote the x-coordinate of the upper left corner of the face envelope box, $D_x$ may denote the x-coordinate of the lower right corner of the face envelope box, $E_x$ may denote the x-coordinate of the upper left corner of the feature envelope box, and $F_x$ may denote the x-coordinate of the lower right corner of the feature envelope box. ($F_x$+$E_x$)/2 may denote the height-directional central axis of the face envelope box, and ($D_x$+$C_x$)/2 may denote the height-directional central axis of the feature envelope box. $D_x$-$C_x$ may denote the width of the face envelope box. According to an example, the width direction may correspond to the x-axis, and the height direction may correspond to the y-axis. The width-directional position may be specified through the x-coordinate, and the height-directional position may be specified through the y-coordinate. When the positional relationship MRR between the face area and the facial feature area is less than the second threshold value, the electronic device may determine that the width-directional position of the face envelope box does not correspond to the width-directional position of the feature envelope box of the facial feature area. In another example, when the positional relationship MRR between the face area and the facial feature area is greater than or equal to another threshold value, the electronic device may determine that the width-directional position of the face envelope box does not correspond to the width-directional position of the feature envelope box of the facial feature area. The second threshold value may be denoted by $T_2$. For example, the second threshold value may be 0.15, but is not limited thereto.

When MRR is less than $T_2$, the position of the facial feature area may not correspond to the position of the face area. In this case, the structural consistency between the facial feature area and the face area in the input face image may be insufficient. Such an input face image may lower the accuracy of face recognition. According to an example, such a face image may correspond to an interference image. The second threshold value may be determined experimentally.

According to an example, for a test on the accuracy of a face recognition technique, a test dataset including noise may be defined. The test dataset may include a positive sample pair and a negative sample pair. The positive sample pair may include two images corresponding to the same person. The negative sample pair may include two images corresponding to different persons. The test result may be evaluated using a true accept rate (TAR) and a false accept rate (FAR). The TAR may be determined using Equation 3 below, for example, and the FAR may be determined using Equation 4 below, for example.

Equation 3:

(Non-identical person score>T)/(Non-identical person comparison count)

Equation 4:

(Identical person score>T)/(Identical person comparison count)

In Equation 3 and Equation 4, T may denote a threshold value. For security reasons, the FAR may be set to be low. The threshold T satisfying the FAR may be determined using Equation 3. The TAR may be determined to be a final evaluation indicator using Equation 4. According to examples, an interference sample may be identified. In this test, irrespective of whether it is an image sample filtered by the image processing method according to examples, all sample pairs may be regarded as enrollment failure sample pairs, and the proportion of the enrollment failure sample pairs to all the sample pairs may be determined as an enrollment failure rate. The enrollment failure sample pairs may be used for the determination of TAR and FAR, and the score of the enrollment failure sample pairs may be regarded as "0".

A sample pair may be compared using cosine similarity. For example, a sample comparison score may be expressed as in Equation 5 below, for example.

Equation 5:

$$\frac{\sum_{i=1}^{n} A_i \times B_i}{\sqrt{\sum_{i=1}^{n} (A_i)^2} \times \sqrt{\sum_{i=1}^{n} (B_i)^2}}$$

In Equation 5, A and B may denote the respective feature vectors of the two images of the sample pair, and n may denote the dimension of the feature vectors. As a sample pair has a higher sample comparison score, the sample pair may have a higher probability of being a positive sample pair.

According to the test result, the image processing method of one or more embodiments may significantly increase the accuracy of interference sample filtering. For example, when the head rotation angle in an image is greater than 90 degrees or close to 90 degrees, the image may be seen invalid even by the naked eye. Thus, it may be difficult for a typical method to acquire reliable identity information from tasks on such an image. The processing method of one or more embodiments may effectively filter such an image based on the structural consistency of the face area and the facial feature area.

The image processing method of one or more embodiments may filter face images with severe interference in a targeted manner, and effectively increase recognition accuracy without changing a general face recognition process or increasing the amount of computation. Such filtering of the image processing method may also consider a situation in which a face detection model and/or a facial keypoint detection model has an error, and/or a situation in which a face image includes an incomplete face.

According to an example, the electronic device may determine an invalid face image based on reclassification of the face image using a face area box and/or the spatial consistency between the face area box and the face area. According to an example, the electronic device may detect a face area box from the input face image, and determine the input face image to be an invalid face image when the face area box satisfies a second preset condition. The face area box may be detected by the face detection model. The second preset condition may include a face condition regarding whether the face area box is determined to be a non-face, a space condition regarding whether the face area box does not spatially correspond to the face area, and/or a combination thereof.

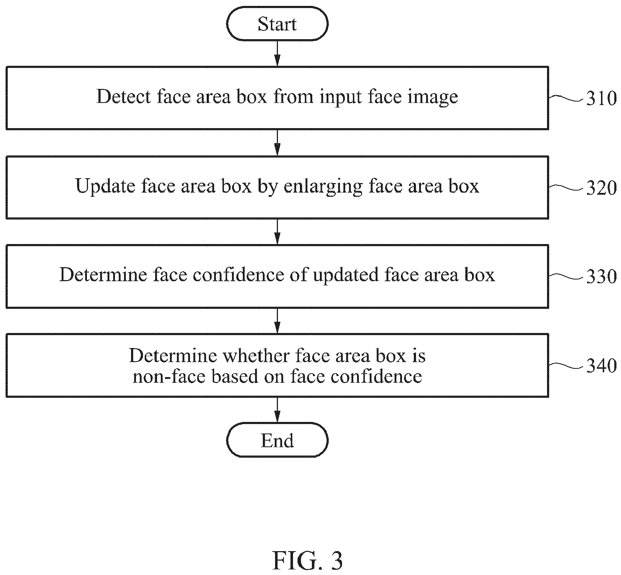

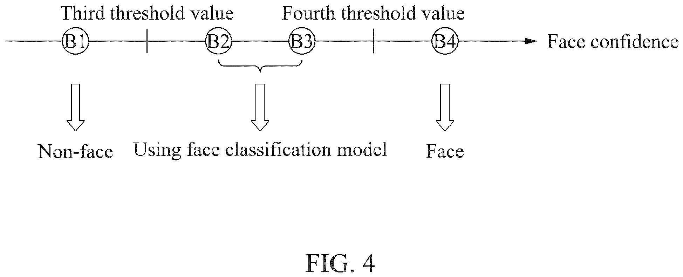

FIGS. 3 and 4 illustrate an example of a face recognition operation using a face classification model. Operations 310-340 to be described hereinafter may be performed sequentially in the order and manner as shown and described below with reference to FIG. 3, but the order of one or more of the operations may be changed, one or more of the operations may be omitted, and/or two or more of the operations may be performed in parallel or simultaneously without departing from the scope of the example embodiments described herein. Referring to FIG. 3, in operation 310, an electronic device may detect a face area box from an input face image. According to an example, the face area box may be detected by a face detection model. For example, the face detection model may be an artificial intelligence model (e.g., a neural network model) trained to detect a face area box from an input face image. In this case, the face detection model may be pretrained to detect a face area box from an input face image through machine learning. A face area may be determined based on facial keypoints detected by a keypoint detection model, and the face area box may be detected by the face detection model.

In operation 320, the electronic device may update the face area box by enlarging the face area box. An initial face area box may include only a portion of a face, not the entire face. According to an example, e.g., in response to determining that the face area box does not include the entire face, the face area box may be updated by enlarging the face area box such that the face area box may include the entire face. For example, the electronic device may determine the updated face area box by extracting a partial image corresponding to the enlarged face area box from the input face image.

According to an example, the electronic device may enlarge the face area box by a preset multiple (e.g., 1.1 times) based on the center point of the face area box. According to one or more other examples, the electronic device may also enlarge the distance between each point of the face area box and the center point by a predetermined multiple, or enlarge the area of the face area box by a predetermined multiple, but examples are not limited thereto.

In operation 330, the electronic device may determine the face confidence of the updated face area box. The face confidence may indicate whether the input face image corresponds to a face. The electronic device may determine whether to use a face classification model based on the face confidence. The face confidence may be determined using a confidence estimation model. The confidence estimation model may be an artificial intelligence model (e.g., a neural network model), and may be a smaller and lighter model than the face classification model. By using two threshold values for the face confidence, the electronic device of one or more embodiments may reduce the waste of computational resources.

In operation 340, the electronic device may determine whether the face area box is a non-face based on the face confidence. When the face confidence is less than a third threshold value, the probability of the input face image being a face image may be low. The third threshold value may be denoted by $T_3$. In this case, a classification task using the face classification model may be unnecessary. For example, an input face image B1 in FIG. 4 may be immediately determined to be a non-face image, without being input into the face classification model. The non-face image may correspond to an invalid image.

When the face confidence is greater than a fourth threshold value, the probability of the input face image being a face image may be high. The fourth threshold value may be denoted by $T_4$. In this case, as well, a classification task using the face classification model may be unnecessary. For example, an input face image B4 in FIG. 4 may be immediately determined to be a face image, without being input into the face classification model. The face image may correspond to a valid image.

When the face confidence is greater than the third threshold value and less than the fourth threshold value, it may be difficult to predict the probability of the input face image being a face image. In this case, a classification task using the face classification model may be performed. In this case, the electronic device may determine the updated face area box to be a face or a non-face using the face classification model. For example, input face images B2 and B3 in FIG. 4 may be input into the face classification model.

According to an example, the face classification model may determine whether the face area box includes facial features as the face area box is input. For example, the face classification model may classify the face area box as a face or a non-face. Here, the face area box may be the updated face area box. Updating the face area box may include enlarging the face area box. According to an example, the face area box may be enlarged according to a fixed input size of the face classification model. The face classification model may be an artificial intelligence model (e.g., a neural network model) trained to classify whether the face area box is a face image or a non-face image. In this case, the face classification model may be pretrained to classify whether the face area box is a face image or a non-face image through machine learning.

According to examples, the face classification model may be trained using a dataset with guaranteed diversity and balance. The balance may refer to the balance between positive samples and negative samples.

A dataset may include positive samples corresponding to face image samples and negative samples corresponding to non-face image samples. The positive samples may be acquired by extracting face areas from given images. For example, a complete face may be extracted from at least one of windows in which an enlarged face area box, a face label box, and an intersection over union (IOU) with the face label box satisfy predetermined conditions. The negative samples may be acquired by extracting non-face areas from given images.

The image processing method according to examples may filter various types of interference samples. For example, an image with environmental noise or severe occlusion from which it is difficult to obtain identity information, or a low-quality face image, may be filtered, but examples are not limited thereto. Image processing of one or more embodiments may increase the accuracy of face recognition and the reliability of recognition results. The face confidence-based image processing method of one or more embodiments may provide excellent results with minimum resources.

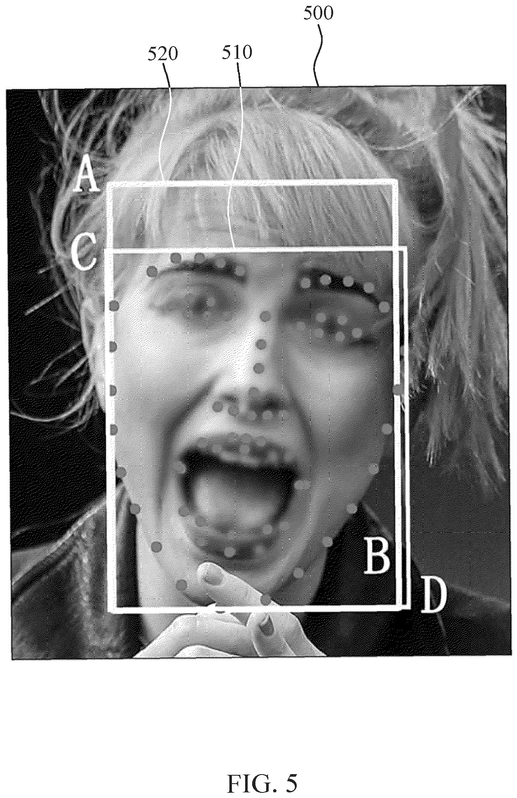

FIG. 5 illustrates an example of a face area box and a face area of an input face image. Referring to FIG. 5, an electronic device may determine whether the spatial condition regarding whether a face area box 520 spatially corresponds to a face area is satisfied. The electronic device may determine whether a second preset condition is satisfied based on the spatial condition being satisfied. The electronic device may determine an input face image 500 to be an invalid face image when the spatial condition and/or the second preset condition is satisfied.

According to an example, the electronic device may determine whether the face area box 520 does not spatially correspond to the face area based on the degree of spatial overlap between the face area box 520 and a face envelope box 510 of the face area. The face envelope box 510 may be the smallest box including facial keypoints. The face envelope box 510 may be represented as $CD=(C_x, C_y, D_x, D_y)$. The face area box 520 may be represented as $AB=(A_x, A_y, B_x, B_y)$. The facial keypoints may be detected by a facial keypoint detection model, and the face envelope box 510 may be determined based on the facial keypoints. The face area box 520 may be detected by a face detection model.

According to an example, the electronic device may determine the IOU between the face area box 520 and the face envelope box 510, and determine that the face area box 520 does not spatially correspond to the face area when the IOU is less than a fifth threshold value. The fifth threshold value may be denoted by $T_5$. The IOU may be used to measure the degree of overlap between the face area box 520 and the face envelope box 510. For example, the IOU may be determined using Equation 6 below, for example.

Equation 6:

$$IoU = \frac{|AB \cap CD|}{|AB \cup CD|} = \frac{(C_x - B_x) \times (C_y - B_y)}{(C_x - A_x) \times (C_y - A_y) + (D_x - B_x) \times (D_y - B_y) - (C_x - B_x) \times (C_y - B_y)}$$

When the IOU is less than the fifth threshold value, the electronic device may determine that the face area box 520 does not spatially correspond to the face area. In this case, the spatial consistency between the face area box 520 and the face area may be insufficient, and it may be difficult to recognize a face using the input face image. The fifth threshold value may be determined experimentally. For example, the fifth threshold value may be 0.47, but is not limited thereto.

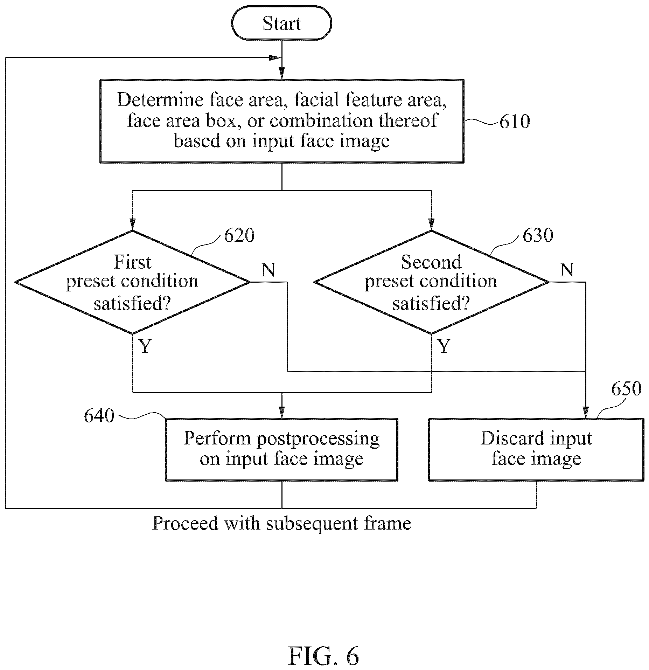

FIG. 6 illustrates an example of a face recognition operation using a preset condition. Operations 610-650 to be described hereinafter may be performed sequentially in the order and manner as shown and described below with reference to FIG. 6, but the order of one or more of the operations may be changed, one or more of the operations may be omitted, and/or two or more of the operations may be performed in parallel or simultaneously without departing from the scope of the example embodiments described herein. Referring to FIG. 6, in operation 610, an electronic device may determine a face area, a facial feature area, a face area box, or a combination thereof based on an input face image. The electronic device may detect facial keypoints of the input face image using a keypoint detection model. The electronic device may determine the face area and the facial feature area based on the facial keypoints. For example, the electronic device may determine a face envelope box corresponding to the face area and a feature envelope box corresponding to the facial feature area based on the facial keypoints. The electronic device may determine the face area box using a face detection model.

In operation 620, the electronic device may check (e.g., determine) whether a first preset condition is satisfied. The first preset condition may include a shape condition regarding the shape of the facial feature area, a position condition regarding the relationship between the position of the facial feature area and the position of the face area, or a combination thereof. The shape condition may be satisfied when the shape of the facial feature area is a preset shape, and the position condition may be satisfied when the position of the face area does not correspond to the position of the facial feature area. When the first preset condition is satisfied, the electronic device may discard the input face image, in operation 650.

In operation 630, the electronic device may check whether a second preset condition is satisfied. The second preset condition may include a face condition regarding whether the face area box is determined to be a non-face, a space condition regarding whether the face area box does not spatially correspond to the face area, or a combination thereof. The face condition may be satisfied when the face area box is determined to be a non-face, and the space condition may be satisfied when the face area box does not spatially correspond to the face area. When the second preset condition is satisfied, the electronic device may discard the input face image, in operation 650.

Operation 620 and operation 630 may be performed in parallel. When any one of the first preset condition in operation 620 and the second preset condition in operation 630 is satisfied, operation 650 may be performed. When both the first preset condition and the second preset condition are not satisfied, operation 640 may be performed.

In operation 640, the electronic device may perform postprocessing for face recognition on the input face image. For example, the postprocessing may include face alignment, facial feature extraction, facial feature comparison, or a combination thereof. The face detection result (e.g., the face area box) of operation 610 and/or the facial keypoint detection result (e.g., the facial keypoints) of operation 610 may be used for the postprocessing. The electronic device may include an additional artificial intelligence model (e.g., a neural network model) for postprocessing, and perform postprocessing using the additional artificial intelligence model. The input face image postprocessed in operation 640 may be a valid face image, and the input face image discarded in operation 650 may be an invalid face image.

After operation 640 and operation 650, operation 610 may be performed on a subsequent frame. For example, face recognition for an input video may be performed, and the input video may include consecutive image frames. The input face image in operation 610 may be one of such consecutive image frames. Operation 610 to operation 640 may be iteratively performed on the consecutive image frames.

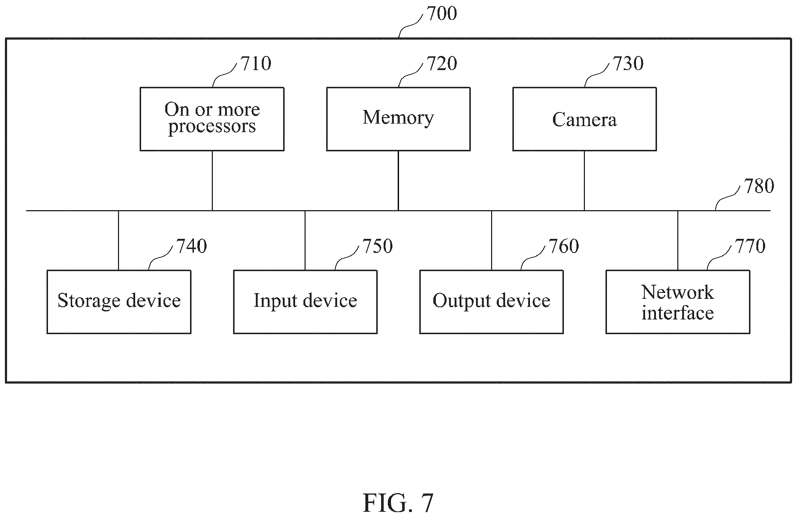

FIG. 7 illustrates an example of a configuration of an electronic device. Referring to FIG. 7, an electronic device 700 may include one or more processors 710, a memory 720 (e.g., one or more memories), a camera 730 (e.g., one or more cameras and/or image sensors), a storage device 740, an input device 750, an output device 760, and a network interface 770, which may communicate with each other through a communication bus 780. For example, the electronic device 700 may be implemented as at least a part of a mobile device such as a mobile phone, a smart phone, a PDA, a netbook, a tablet computer or a laptop computer, a wearable device such as a smart watch, a smart band or smart glasses, a computing device such as a desktop or a server, a home appliance such as a television, a smart television or a refrigerator, a security device such as a door lock, or a vehicle such as an autonomous vehicle or a smart vehicle.

The one or more processors 710 execute instructions and functions to be executed within the electronic device 700. For example, the one or more processors 710 may process the instructions stored in the memory 720 or the storage device 740. The instructions, when executed by the one or more processors 710, may cause the electronic device 700 to perform the operations described with reference to FIGS. 1 to 6.

The memory 720 may include a computer-readable storage medium or a computer-readable storage device. The memory 720 may store instructions to be executed by the one or more processors 710, and store relevant information while software and/or an application is executed by the electronic device 700. For example, the memory 720 may include a non-transitory computer-readable storage medium storing instructions that, when executed by the one or more processors 710, configure the one or more processors 710 to perform any one, any combination, or all of the operations and/or methods described with reference to FIGS. 1 to 6.

The camera 730 may capture a photo and/or record a video. The storage device 740 may include a computer-readable storage medium or a computer-readable storage device. The storage device 740 may store a more quantity of information than the memory 720 for a long time. For example, the storage device 740 may include a magnetic hard disk, an optical disc, a flash memory, a floppy disk, or other non-volatile memories known in the art.

The input device 750 may receive an input from a user in traditional input manners through a keyboard and a mouse, and in new input manners such as a touch input, a voice input, and an image input. For example, the input device 750 may include a keyboard, a mouse, a touch screen, a microphone, or any other device that detects the input from the user and transmits the detected input to the electronic device 700. The output device 760 may provide an output of the electronic device 700 to the user through a visual, auditory, or haptic channel. The output device 760 may include, for example, a display, a touch screen, a speaker, a vibration generator, or any other device that provides the output to the user. The network interface 770 may communicate with an external device through a wired or wireless network.

The electronic devices, one or more processors, memories, cameras, storage devices, input devices, output devices, network interfaces, communication buses, electronic device 700, one or more processors 710, memory 720, camera 730, storage device 740, input device 750, output device 760, network interface 770, and communication bus 780 described herein, including descriptions with respect to respect to FIGS. 1-7, are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in, and discussed with respect to, FIGS. 1-7 that perform the operations described in this application are performed by computing hardware, for example, by one or more processors or computers, implemented as described above implementing instructions (e.g., computer or processor/processing device readable instructions) or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks , and/or any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components.

Therefore, in addition to the above and all drawing disclosures, the scope of the disclosure is also inclusive of the claims, i.e., all variations within the scope of the claims are to be construed as being included in the disclosure.

## Claims

1. A processor-implemented method with image processing, the method comprising:

   detecting facial keypoints from an input face image;
   determining a face area of the input face image and a facial feature area of the input face image based on the facial keypoints; and
   determining the input face image to be an invalid face image in response to the facial feature area satisfying a first preset condition,
   wherein the first preset condition comprises either one or both of a shape condition regarding a shape of the facial feature area, and a position condition regarding a relationship between a position of the facial feature area and a position of the face area.

2. The method of claim 1, wherein the shape condition is satisfied in response to the shape of the facial feature area being a preset shape and/or
   wherein the position condition is satisfied in response to the position of the face area not corresponding to the position of the facial feature area.

3. The method of claim 1 or 2, wherein the determining of the face area and the facial feature area comprises:

   determining an area comprising the facial keypoints to be the face area; and
   determining an area comprising feature keypoints other than contour keypoints corresponding to a facial contour among the facial keypoints to be the facial feature area.

4. The method of any of the previous claims, wherein

   the position condition is satisfied in response to a width-directional position of a face envelope box of the face area not corresponding to a width-directional position of a feature envelope box of the facial feature area,
   the shape condition is satisfied in response to a shape of the feature envelope box being a preset shape,
   the face envelope box is a smallest box comprising the facial keypoints, and
   the feature envelope box is a smallest box comprising keypoints belonging to the facial feature area among the facial keypoints.

5. The method of claim 4, wherein

   the shape of the feature envelope box is determined to be the preset shape, in response to a height-to-width ratio of the feature envelope box being greater than a first threshold value, and
   it is determined that the width-directional position of the face envelope box does not correspond to the width-directional position of the feature envelope box of the facial feature area, in response to a ratio between a distance between a height-directional central axis of the face envelope box and a height-directional central axis of the feature envelope box and a width of the face envelope box being less than a second threshold value.

6. The method of any of the previous claims, further comprising:

   detecting a face area box from the input face image; and
   determining the input face image to be an invalid face image, in response to the face area box satisfying a second preset condition,
   wherein the second preset condition comprises either one or both of a face condition regarding whether the face area box is determined to be a non-face, and a space condition regarding whether the face area box does not spatially correspond to the face area.
   wherein preferably the determining of the input face image to be an invalid face image comprises:

      updating the face area box by enlarging the face area box of the input face image;
      determining a face confidence of the updated face area box indicating a probability that the updated face area box comprises a face; and
      determining the updated face area box to be a non-face using a face classification model, in response to the face confidence being greater than a third threshold value and less than a fourth threshold value.

7. The method of claim 6, wherein

   the determining of the input face image to be an invalid face image comprises determining whether the face area box does not spatially correspond to the face area, based on a degree of spatial overlap between the face area box and the face envelope box of the face area, and
   the face envelope box is a smallest box comprising the facial keypoints.

8. The method of claim 7, wherein the determining of whether the face area box does not spatially correspond to the face area comprises:

   determining an intersection over union (IOU) between the face area box and the face envelope box; and
   determining that the face area box does not spatially correspond to the face area, in response to the IOU being less than a fifth threshold value.

9. A non-transitory computer-readable storage medium storing instructions that, when executed by one or more processors, configure the one or more processors to perform the method of any of the previous claims.

**10.** An electronic device comprising:

one or more processors configured to:

detect facial keypoints from an input face image;
determine a face area of the input face image and a facial feature area of the input face image based on the facial keypoints; and
determine the input face image to be an invalid face image in response to the facial feature area satisfying a first preset condition,

wherein the first preset condition comprises either one or both of a shape condition regarding a shape of the facial feature area, and a position condition regarding a relationship between a position of the facial feature area and a position of the face area.

**11.** The electronic device of claim 10, wherein

the shape condition is satisfied in response to the shape of the facial feature area being a preset shape, and/or the position condition is satisfied in response to the position of the face area not corresponding to the position of the facial feature area.

**12.** The electronic device of claim 10 or 11, wherein, for the determining of the face area and the facial feature area, the one or more processors are configured to:

determine an area comprising the facial keypoints to be the face area; and
determine an area comprising feature keypoints other than contour keypoints corresponding to a facial contour among the facial keypoints to be the facial feature area.

**13.** The electronic device of any of the previous device claims, wherein

the position condition is satisfied in response to a width-directional position of a face envelope box of the face area not corresponding to a width-directional position of a feature envelope box of the facial feature area,
the shape condition is satisfied in response to a shape of the feature envelope box being a preset shape,
the face envelope box is a smallest box comprising the facial keypoints, and
the feature envelope box is a smallest box comprising keypoints belonging to the facial feature area among the facial keypoints, wherein preferably
the shape of the feature envelope box is determined to be the preset shape, in response to a height-to-width ratio of the feature envelope box being greater than a first threshold value, and
it is determined that the width-directional position of the face envelope box does not correspond to the width-directional position of the feature envelope box of the facial feature area, in response to a ratio between a distance between a height-directional central axis of the face envelope box and a height-directional central axis of the feature envelope box and a width of the face envelope box being less than a second threshold value.

**14.** The electronic device of any of the previous device claims, wherein the one or more processors are configured to:

detect a face area box from the input face image; and
determine the input face image to be an invalid face image, in response to the face area box not satisfying a second preset condition,
wherein the second preset condition comprises either one or both of a face condition regarding whether the face area box is determined to be a non-face, and a space condition regarding whether the face area box does not spatially correspond to the face area.
wherein preferably, for the determining of the input face image to be the invalid face image, the one or more processors are configured to:

update the face area box by enlarging the face area box of the input face image;
determine a face confidence of the updated face area box indicating a probability that the updated face area box comprises a face; and
determine the updated face area box to be a non-face using a face classification model, in response to the face confidence being greater than a third threshold value and less than a fourth threshold value.

**15.** The electronic device of claim 14, wherein

for the determining of the input face image to be the invalid face image, the one or more processors are configured to determine whether the face area box does not spatially correspond to the face area, based on a degree of spatial overlap between the face area box and the face envelope box of the face area, and
the face envelope box is a smallest box comprising the facial keypoints.

FIG. 1

FIG. 2

```
                        ┌─────────────┐
                        │    Start    │
                        └──────┬──────┘
                               │
        ┌──────────────────────▼──────────────────────┐
        │  Detect face area box from input face image  │────310
        └──────────────────────┬──────────────────────┘
                               │
        ┌──────────────────────▼──────────────────────┐
        │   Update face area box by enlarging face area box   │────320
        └──────────────────────┬──────────────────────┘
                               │
        ┌──────────────────────▼──────────────────────┐
        │  Determine face confidence of updated face area box  │────330
        └──────────────────────┬──────────────────────┘
                               │
        ┌──────────────────────▼──────────────────────┐
        │       Determine whether face area box is      │────340
        │        non-face based on face confidence      │
        └──────────────────────┬──────────────────────┘
                               │
                        ┌──────▼──────┐
                        │     End     │
                        └─────────────┘
```

FIG. 3

Third threshold value      Fourth threshold value

(B1)———|———(B2)———(B3)———|———(B4)———▶ Face confidence

⇓                ⇓                ⇓

Non-face     Using face classification model     Face

FIG. 4

FIG. 5

FIG. 6

FIG. 7

Europäisches
Patentamt
European
Patent Office
Office européen
des brevets

# EUROPEAN SEARCH REPORT

**Application Number**

EP 24 18 5602

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 241 667 A (HUAWEI TECH CO LTD) 19 January 2021 (2021-01-19) | 1-3, 6-12,15 | INV. G06V40/16 G06V10/25 |
| A | * paragraph [0074] - paragraph [0088] * | 4,5,13, 14 | |
| A | CN 109 993 067 A (MEGVII TECH LTD) 9 July 2019 (2019-07-09) * the whole document * | 1-15 | |
| A | US 2020/334812 A1 (SU LIU [CN] ET AL) 22 October 2020 (2020-10-22) * the whole document * | 1-15 | |

**TECHNICAL FIELDS SEARCHED (IPC)**

G06V

The present search report has been drawn up for all claims

| Place of search | Date of completion of the search | Examiner |
|---|---|---|
| The Hague | 8 November 2024 | de Bont, Emma |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 5602

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2024

| Patent document cited in search report | | Publication date | Patent family member(s) | | Publication date |
|---|---|---|---|---|---|
| CN 112241667 | A | 19-01-2021 | NONE | | |
| CN 109993067 | A | 09-07-2019 | NONE | | |
| US 2020334812 | A1 | 22-10-2020 | CN | 109934766 A | 25-06-2019 |
| | | | JP | 7160925 B2 | 25-10-2022 |
| | | | JP | 2021517999 A | 29-07-2021 |
| | | | KR | 20200107930 A | 16-09-2020 |
| | | | SG | 11202006345U A | 29-10-2020 |
| | | | TW | 202034280 A | 16-09-2020 |
| | | | US | 2020334812 A1 | 22-10-2020 |
| | | | WO | 2020177394 A1 | 10-09-2020 |

EPO FORM P0459

For more details about this annex : see Official Journal of the European Patent Office, No. 12/82